# EUROPÄISCHE PATENTSCHRIFT

(11) **EP 1 119 925 B1**
(45) Veröffentlichungstag und Bekanntmachung des Hinweises auf die Patenterteilung: **09.04.2003**
(21) Anmeldenummer: 99970525.4
(22) Anmeldetag: 08.10.1999
(51) Int. Cl.: H04B 7/005

(54) **VERFAHREN UND FUNK-KOMMUNIKATIONSSYSTEM ZUR LEISTUNGSREGELUNG ZWISCHEN EINER BASISSTATION UND EINER TEILNEHMERSTATION**
METHOD AND RADIO COMMUNICATION SYSTEM FOR REGULATING POWER BETWEEN A BASE STATION AND A SUBSCRIBER STATION
PROCEDE ET SYSTEME DE COMMUNICATION RADIO POUR LE REGLAGE DE PUISSANCE ENTRE UNE STATION DE BASE ET UNE STATION ABONNEE

(30) Priorität: 09.10.1998 DE 19846675
(43) Veröffentlichungstag der Anmeldung: 01.08.2001
(60) Teilanmeldung: 02023967.9
(73) Patentinhaber: SIEMENS AKTIENGESELLSCHAFT, 80333 München (DE)
(72) Erfinder: BENZ, Michael, D-13629 Berlin (DE); KLEIN, Anja, D-10709 Berlin (DE); SITTE, Armin, D-10405 Berlin (DE); ULRICH, Thomas, D-13505 Berlin (DE); SOMMER, Volker, D-13503 Berlin (DE); KÖHN, Reinhard, D-14197 Berlin (DE); KRAUSE, Jörn, D-12107 Berlin (DE); TRAYNARD, Jean-Michel, D-81667 München (DE); KOTTKAMP, Meik, D-81369 München (DE); FÄRBER, Michael, D-82515 Wolfratshausen (DE); OESTREICH, Stefan, D-83607 Holzkirchen (DE); OBERMANNS, Sebastian, D-46395 Bocholt (DE); LANDENBERGER, Holger, D-46397 Bocholt (DE); GOLDHOFER, Franz, D-83666 Waakirchen (DE)
(86) Internationale Anmeldenummer: DE9903249
(87) Internationale Veröffentlichungsnummer: WO00022757

(56) Entgegenhaltungen:
- WO-A-96/31014
- WO-A-96/38944
- WO-A-98/09384
- WO-A-98/11677
- WO-A-98/36508
- JP-A- 9 275 373
- US-A- 5 771 451
- KIM J H ET AL: "PERFORMANCE OF SINGLE-BIT ADAPTIVE STEP-SIZE CLOSED-LOOP POWER CONTROL SCHEME IN DS-CDMA SYSTEMS" IEICE TRANSACTIONS ON COMMUNICATIONS, INSTITUTE OF ELECTRONICS INFORMATION AND COMM. ENG. TOKYO, JP, Bd. E81-B, Nr. 7, 1. Juli 1998 (1998-07-01), Seiten 1548-1552, XP000790190 ISSN: 0916-8516
- JAEHEUNG KIM ET AL: "The performance analysis of reverse power control for DS/CDMA system" PERSONAL WIRELESS COMMUNICATIONS, 1997 IEEE INTERNATIONAL CONFERENCE ON MUMBAI, INDIA 17-19 DEC. 1997, NEW YORK, NY, USA,IEEE, US, 17. Dezember 1997 (1997-12-17), Seiten 215-218, XP010268133 ISBN: 0-7803-4298-4
- YANIKOMEROGLU H et al. "Power control and number of antenna elements in CDMA distributed antenna systems" ICC'98. 1998 IEEE INTERNATIONAL CONFERENCE ON COMMUNICATIONS. CONFERENCE RECORD. AFFILIATED WITH SUPERCOMM'98 (CAT. NO. 98CH36220) ATLANTA, GA, USA, 7-11 JUNE 1998, pages 1040-1045 vol. 2, XP002138830 1998, New York, NY, USA, IEEE, USA ISBN: 0-7803-4788-9

## Beschreibung

Die Erfindung betrifft ein Verfahren und ein Funk-Kommunikationssystem zur Leistungsregelung zwischen einer Basisstation und einer Teilnehmerstation, insbesondere für CDMA-Übertragungssverfahren in breitbandigen Übertragungskanälen.

In Funk-Kommunikationssystemen werden Nachrichten (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind breitbandige (B = 5 MHz) Funkschnittstellen vorgesehen, die ein CDMA-Übertragungsverfahren (CDMA code division multiple access) zur Unterscheidung unterschiedlicher Übertragungskanäle verwenden. Für das CDMA-Übertragungsverfahren ist eine ständige Sendeleistungsregelung notwendig, die in Form einer geschlossenen Regelungsschleife in der Regel für beide Übertragungsrichtungen funktioniert. Für die Aufwärtsrichtung (die Funkübertragung von der Mobilstation zur Basisstation) wertet die Basisstation Aussendungen der Mobilstation bezüglich der Übertragungsqualität aus und überträgt zurück zur Teilnehmerstation eine Stellanweisung, die von der Teilnehmerstation für folgende Aussendungen zur Sendeleistungsregelung genutzt wird. Aus ETSI STC SMG2 UMTS-L1, Tdoc SMG2 UMTS-L1 221/98, vom 25.8.1998, S.29-30, ist es bekannt, eine feste Schrittgröße für eine Erhöhung oder Verringerung der Sendeleistung anzugeben, die nur von Funkzelle zu Funkzelle variieren kann. Die Schrittgröße der Sendeleistungskorrektur ist also ein statischer Parameter. Die statische Festlegung der Schrittgröße ignoriert jedoch bestimmte dynamische Eigenschaften des Übertragungsverhaltens über die Funkschnittstelle, die zeitweilig bei zu hoher Sendeleistung eine unnötig hohe Interferenz im Funk-Kommunikationssystem bzw. bei zu geringer Sendeleistung eine zu schlechte Übertragungsqualität hervorruft. Es ist Aufgabe der Erfindung, das Übertragungsverhalten zu verbessern. Diese Aufgabe wird entsprechend dem Verfahren mit den Merkmalen des Anspruchs 1 und das Funk-Kommunikationssystem mit den Merkmalen des Anspruchs 16 gelöst. Vorteilhafte Weiterbildungen sind den Unteransprüchen zu entnehmen.

Erfindungsgemäß werden in einer ersten Funkstation die Aussendungen einer zweiten Funkstation empfangen und eine Stellanweisung für die Sendeleistung der zweiten Funkstation ermittelt. Die Stellanweisung wird bei einer folgenden Aussendung der ersten Funkstation an die zweite Funkstation übertragen, worauf diese die Stellanweisung bei einer ihrer folgenden Aussendungen zur Sendeleistungseinstellung berücksichtigt. Im Gegensatz zum Stand der Technik bei breitbandigen CDMA-Übertragungsverfahren wird bei der Veränderung der Sendeleistung keine zeitinvariante und feste Schrittgröße benutzt, sondern eine Stellanweisung, die auf eine variable Schrittgröße der Sendeleistungseinstellung bezogen ist. Die variable Schrittgröße wird teilnehmerabhängig und zeitabhängig von den Funkstationen eingestellt.

Je größer die Schrittgröße ist, umso schneller werden falsche Sendeleistungseinstellungen korrigiert, allerdings auf Kosten einer ungenaueren Regelung. Bei kleiner Schrittgröße ist die Regelung genauer, jedoch ist die Verzögerung bis zur Korrektur von starken Abweichungen größer. Durch die variable Schrittgröße kann die Regelung teilnehmer- und zeitabhängig allen Übertragungsbedingungen angepaßt und die Regelung somit verbessert werden. Eine verbesserte Regelung bewirkt verringerte Interferenzen und eine für alle Verbindungen garantierte Übertragungsqualität.

Nach der Erfindung wird in den Funkstationen zeitlich wiederkehrend ein Übertragungszustand für die Verbindung ausgewertet und bei Änderungen des Übertragungszustands die Schrittgröße erhöht oder verringert. Der Übertragungszustand ist
- eine Unterbrechung eines kontinuierlichen Übertragungsmodus zu Meßzwecken (slotted mode).

Durch einen Wechsel dieses Übertragungszustandes wird die Regelschleife für eine bestimmte Zeit unterbrochen bzw. die Unterbrechungszeit verändert oder die Detektionsgüte der übertragenen Informationen schlagartig verändert. Dem kann durch die variable Schrittgröße besser entsprochen werden.

Das Regelungsverfahren eignet sich besonders für Funkschnittstellen, die ein CDMA-Teilnehmerseparierungsverfahren in breitbandigen Übertragungskanälen benutzen und bei denen eine Vielzahl von die Regelschleife verändernden Übertragungszuständen möglich ist. Typische Anwendungsfälle sind der FDD (frequency division duplex) und TDD (time division duplex) Modus in Mobilfunksystemen der 3. Generation. Die Regelung gilt für Auf- und Abwärtsrichtung, so daß die erste Funkstation entweder Basisstation oder Teilnehmerstation ist.

Welche Schrittgröße zu verwenden ist, ergibt sich aus einer Signalisierung, implizit kodiert innerhalb der übertragenen Stellanweisung oder gemäß einer die unterschiedlichen Übertragungszustände mit den zu verwendenden Schrittgrößen verknüpfenden Korrespondenztabelle oder Berechnungsvorschrift. Es können auch Kombinationen dieser Maßnahmen eingesetzt werden. Für welche Übertragungszustandsänderungen welche Festlegungen vorteilhaft sind, ergibt sich aus den Ausführungsbeispielen.

Ausführungsbeispiele der Erfindung werden anhand der beiliegenden Zeichnungen näher erläutert.

Dabei zeigen
- Fig 1: eine schematische Darstellung eines Funk-Kommunikationssystems,
- Fig 2: eine Festlegung der Schrittgröße beim "slotted mode", und
- Fig 3: eine Regelungsschleife zur Sendeleistungseinstellung.

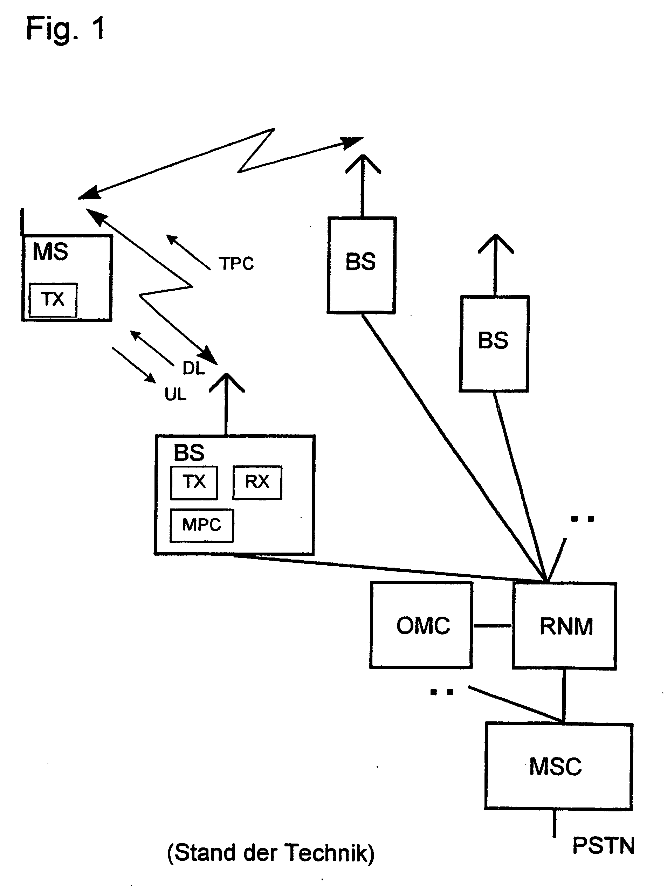

Das in Fig. 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS.

Eine solche Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 ist eine Verbindung V zur Übertragung von Nutzinformationen zwischen einer Basisstation BS und einer Mobilstation MS dargestellt. Eine Sendeleistungsregelung der Funkverbindung über diese Funkschnittstelle wird später erläutert, wobei nur die Sendeleistungseinstellung der Mobilstation MS gezeigt wird. Für die umgekehrte Übertragungsrichtung sind äquivalente Maßnahmen anwendbar.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Die Sendeleistungsregelung wird für die Funkübertragung in Aufwärtsrichtung UL gezeigt. Von Sendemitteln TX der Mobilstation MS werden Informationen in Aufwärtsrichtung UL gesendet, wobei zur Sendeleistungseinstellung eine Stellanweisung TPC berücksichtigt wird. Diese Stellanweisung TPC entsteht dadurch, daß in der Basisstation BS Empfangsmittel RX die Aussendungen der Mobilstation MS empfangen und Kontrollmittel MPC die Stellanweisung TPC ermitteln, die daraufhin in Abwärtsrichtung DL an die Mobilstation MS übertragen wird.

Die Sendeleistung der Mobilstation MS wird dabei nicht beliebig verändert, sondern schrittweise. Sendet die Mobilstation MS zuvor mit einer Sendeleistung Px, so wird durch die Sendeleistungsregelung diese Sendeleistung zur folgenden Aussendung entweder erhöht oder verringert. Falls ein Übertragungsfehler auftritt, wird die Sendeleistung beibehalten. Durch eine Signalisierung der Stellanweisung TPC von der Basisstation BS zur Mobilstation MS wird mitgeteilt, welcher der drei Fälle vorliegt. Die Erhöhung oder Verringerung geschieht jedoch nur mit einer Schrittgröße ΔTPC, die nicht beliebig sondern vorgegeben ist. Erfindungsgemäß ist diese Schrittgröße ΔTPC teilnehmer- und zeitabhängig.

Für die Festlegung der Schrittgröße ΔTPC, die gemeinsam mit der Stellanweisung TPC und der vorherigen Sendeleistung eine eindeutige Vorschrift zur Sendeleistungseinstellung ergibt, können drei Methoden angewendet werden.

### Methode 1:

Auch die zu verwendende Schrittgröße ΔTPC wird signalisiert. Solange keine Änderung der Schrittgröße ΔTPC angekündigt wird, wird die aktuelle Schrittgröße ΔTPC beibehalten. Die Schnelligkeit mit der eine Schrittgröße ΔTPC neu eingestellt werden kann, hängt damit von den Signalisierungsmöglichkeiten ab.

### Methode 2:

Die aktuell zur verwendende Schrittgröße ΔTPC ist implizit in der Stellanweisung TPC durch eine entsprechende Kodierung enthalten. Wie in ETSI STC SMG2 UMTS-L1, Tdoc SMG2 UMTS-L1 221/98, vom 25.8.1998, S.29-30, gezeigt, wird nach dem Stand der Technik die Stellanweisung, die nur ein Bit (Leistung + (erhöht) oder Leistung - (verringert)) benötigt, mit zwei Bit kodiert. Die zusätzliche Signalisierung der Schrittgröße ΔTPC kann entweder dadurch erfolgen, daß mehr als zwei Bit zur Signalisierung verwendet werden oder daß die Redundanz bei der Signalisierung verringert wird.

### Methode 3:

Die zu verwendende Schrittgröße ΔTPC ist fest an bestimmte Ereignisse oder Übertragungsmodi gebunden, die im folgenden als Übertragungszustände bezeichnet werden. Die Verknüpfung zwischen Übertragungszustand und Schrittgröße ΔTPC ist in einer Zuordnungstabelle gespeichert, die für beide Funkstationen MS, BS verbindlich ist.

Im folgenden wird die Festlegung der Schrittgröße ΔTPC erläutert.

### "slotted mode"

Der sogenannte "slotted mode" im FDD-Modus (frequency division duplex), siehe dazu ETSI STC SMG2 UMTS-L1, Tdoc SMG2 UMTS-L1 221/98, vom 25.8.1998, S.33-34, beschreibt eine Unterbrechung einer ansonsten kontinuierlichen Übertragung zu Meßzwecken, um z.B. eine Übergabe der Mobilstation MS zu einer anderen Basisstation BS vorzubereiten. Die Unterbrechung kann in Auf- oder Abwärtsrichtung erfolgen. Während der Zeit der Unterbrechung ist die Regelschleife nicht wirksam, so daß bei einer Wiederaufnahme der Übertragung die zuvor eingestellt Sendeleistung oft stark von der optimalen abweicht. Zur schnellen Korrektor der Sendeleistung wird nach der Unterbrechung die Schrittgröße ΔTPC temporär erhöht. Dabei ist die Erhöhung vorteilhafterweise umso größer, umso länger die Unterbrechung andauerte.

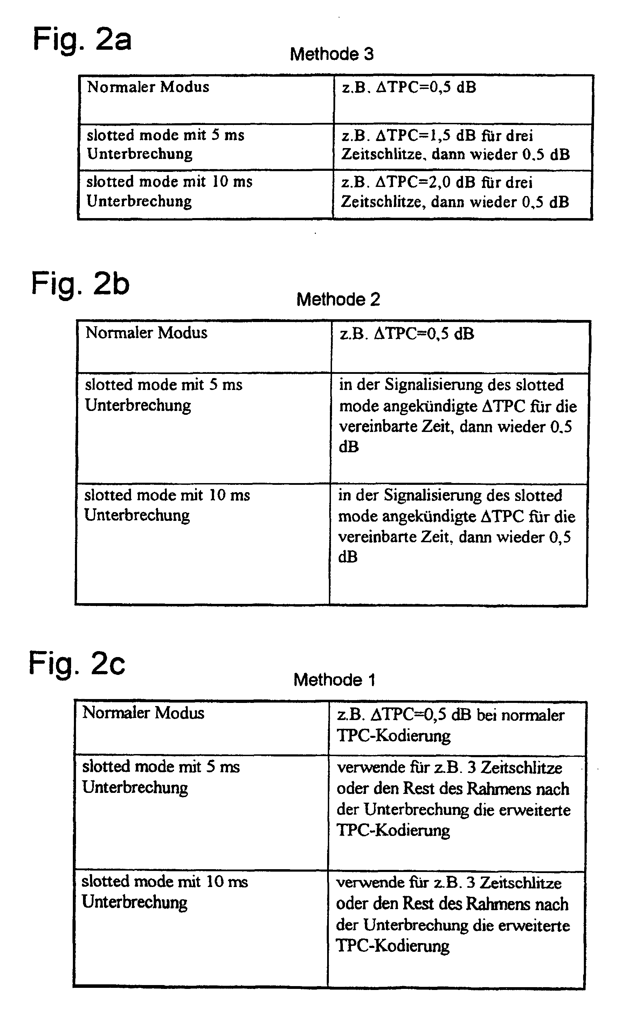

Nach Fig 2a gilt normalerweise eine Schrittgröße ΔTPC von 0,5 dB, die bei einer Unterbrechung von 5 ms für drei Zeitschlitze auf 1,5 dB oder bei einer Unterbrechung von 10 ms auf 2,0 dB erhöht wird, bevor dann wieder ΔTPC=0,5 dB gilt. Dies ist entsprechend Methode 1 fest vorgegeben und damit sowohl der Mobilstation MS als auch der Basisstation BS bekannt.

Alternativ dazu kann nach Fig 2b in der den "slotted mode" ankündigenden Signalisierung auch die anschießend zu verwendende Schrittgröße ΔTPC signalisiert werden. Die Schrittgröße kann damit abhängig von der Dauer der Unterbrechung eingestellt werden. Entweder ist die Dauer der Gültigkeit der geänderten Schrittgröße ΔTPC vorher festgelegt, z.B. drei Zeitschlitze, oder in der Signalisierung enthalten. Eine weitere Möglichkeit ist in Fig 2c gezeigt, wobei für eine Zeitspanne von drei Zeitschlitzen oder den Rest eines Rahmens eine erweitere TPC-Kodierung, d.h. die impliziten Übertragung der Schrittgröße ΔTPC zusammen mit der Stellanweisung TPC, verwendet wird, um größere Schritte bei der Sendeleistungskorrektur zu ermöglichen.

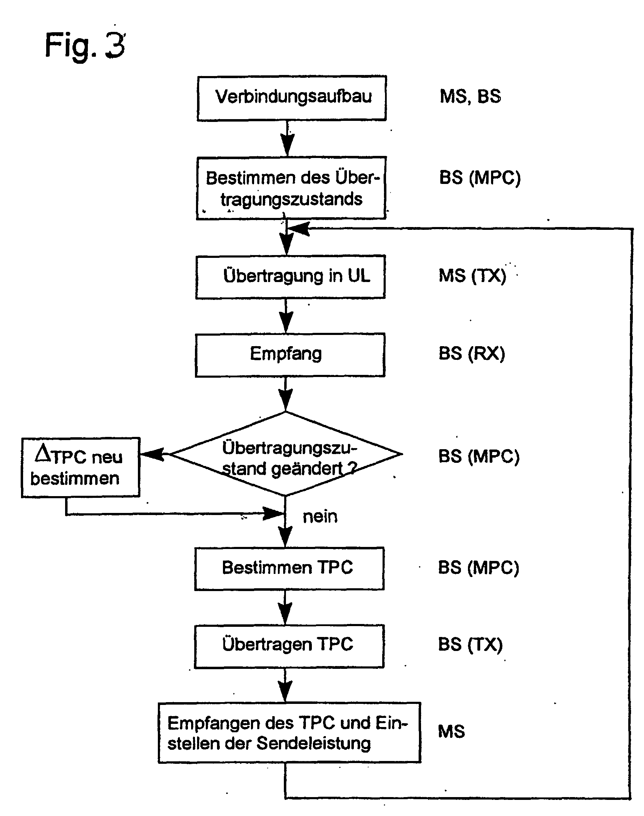

Nach Fig. 3 kann die Sendeleistungsregelung für eine Übertragung in Aufwärtsrichtung wie folgt vereinfacht beschrieben werden:

Nach einem Verbindungsaufbau wird der Übertragungszustand durch die Kontrollmittel MPC der Basisstation BS bestimmt. Durch die Sendemittel TX der Mobilstation MS wird in Aufwärtsrichtung UL gesendet. Diese Aussendungen werden von Empfangsmitteln RX der Basisstation BS empfangen. Weiterhin fragen die Kontrollmittel MPC ab, ob sich der Übertragungszustand zwischenzeitlich geändert hat. Wenn ja dann wird die Schrittgröße ΔTPC neu bestimmt, ansonsten wird die zu Verbindungsbeginn eingestellte Schrittgröße ΔTPC beibehalten. Weiterhin bestimmten die Kontrollmittel MPC die Stellanweisung TPC, so daß die Stellanweisung in Abwärtsrichtung DL von Übertragungsmitteln TX der Basisstation BS zur Mobilstation MS übertragen werden können.

Die Mobilstation MS empfängt die Stellanweisung TPC und stellt für folgende Aussendungen die Sendeleistung entsprechend ein, wobei gleichzeitig die Schrittgröße ΔTPC berücksichtigt wird. Die Schrittgröße ΔTPC war nach Methode 2 entweder in der Stellanweisung TPC enthalten, wurde nach Methode 1 signalisiert oder konnte nach Methode 3 von der Mobilstation MS aus den vorliegenden Übertragungszustand rekonstruiert werden.

## Patentansprüche

1. Verfahren zur Leistungsregelung für ein Funk-Kommunikationssystem mit einer Funkschnittstelle zwischen einer ersten und einer zweiten Funkstation (BS, MS), bei dem
- in der ersten Funkstation (BS, MS) die Aussendungen der zweiten Funkstation (MS, BS) empfangen werden und eine Stellanweisung (TPC) für die Sendeleistung der zweiten Funkstation (MS, BS) ermittelt wird,
- die Stellanweisung (TPC) bei einer folgenden Aussendung der ersten Funkstation (BS, MS) an die zweite Funkstation (MS, BS) übertragen wird,
- die zweite Funkstation (MS, BS) die Stellanweisung (TPC) bei einer ihrer folgenden Aüssendungen zur Sendeleistungseinstellung berücksichtigt,
- die Stellanweisung (TPC) auf eine variable Schrittgröße (ΔTPC) der Sendeleistungseinstellung bezogen ist, die teilnehmerabhängig und zeitabhängig von den Funkstationen (BS, MS) eingestellt wird,
- und in den Funkstationen (BS, MS) zeitlich wiederkehrend ein Zustand der Übertragung zwischen den Funkstationen ausgewertet wird,
**dadurch gekennzeichnet,**
- **daß** der Übertragungszustand eine Unterbrechung einer kontinuierlichen Übertragung zu Meßzwecken ist,
- und **daß** nach Beendigung der Unterbrechung vorübergehend die Schrittgröße der Sendeleistungseinstellung erhöht wird.

2. Verfahren nach Anspruch 1,
bei dem das Maß der Erhöhung der Schrittgröße abhängig von der Länge der Unterbrechung ist.

3. Verfahren nach einem der vorherigen Ansprüche, **dadurch gekennzeichnet, daß** für die Funkschnittstelle ein CDMA-Übertragungsverfahren in breitbandigen Übertragungskanälen benutzt wird.

4. Verfahren nach einem der vorherigen Ansprüche, **dadurch gekennzeichnet, daß** die erste Funkstation eine Basisstation (BS) und die zweite Funkstation eine Teilnehmerstation (MS) ist.

5. Verfahren nach einem der Ansprüche 1 bis 3, **dadurch gekennzeichnet, daß** die erste Funkstation eine Teilnehmerstation (MS) und die zweite Funkstation eine Basisstation (BS) ist.

6. Verfahren nach einem der vorherigen Ansprüche, **dadurch gekennzeichnet, daß** die zu verwendende Schrittgröße (ΔTPC) signalisiert wird.

7. Verfahren nach einem der Ansprüche 1 bis 5, **dadurch gekennzeichnet, daß** die zu verwendende Schrittgröße (ΔTPC) durch die übertragene Stellanweisung (TPC) festgelegt wird.

8. Verfahren nach einem der Ansprüche 1 bis 5, **dadurch gekennzeichnet, daß** die zu verwendende Schrittgröße (ΔTPC) gemäß einer die unterschiedlichen Übertragungszustände mit den zu verwendenden Schrittgrößen (ΔTPC) verknüpfenden Korrespondenztabelle oder Berechnungsvorschrift festgelegt wird.

9. Funk-Kommunikationssystem
- mit einer ersten Funkstation (BS, MS) und einer zweiten Funkstation (MS, BS), die über eine Funkschnittstelle miteinander verbunden sind,
- mit der zweiten Funkstation (MS, BS) zugeordneten Sendemitteln (TX) zum Senden von Informationen, wobei eine Stellanweisung (TPC) zur Sendeleistungseinstellung berücksichtigt wird,
- mit der ersten Funkstation (BS, MS) zugeordneten Empfangsmitteln (RX) zum Empfangen der Aussendung der zweiten Funkstation (MS), Kontrollmitteln (MPC) zum Ermitteln einer Stellanweisung (TPC) für die Sendeleistung der zweiten Funkstation (MS) und Übertragungsmitteln (TX) zum Übertragen der Stellanweisung (TPC) bei einer folgenden Aussendung der ersten Funkstation (BS, MS) an die zweite Funkstation (MS, BS),
- bei dem die Kontrollmittel (MPC) der ersten Funkstation (BS, MS) derart ausgebildet sind, daß ein Übertragungszustand für die zweite Funkstation (MS, BS) ausgewertet wird und bei Änderung des Übertragungszustandes im Sinne einer variablen Schrittgröße (ΔTPC) der Sendeleistungseinstellung diese Schrittgröße (ΔTPC) teilnehmer- und zeitabhängig erhöht oder verringert wird, **dadurch gekennzeichnet,**
- **daß** der Übertragungszustand eine Unterbrechung einer kontinuierlichen Übertragung zu Meßzwecken ist,
- und **daß** nach Beendigung der Unterbrechung vorübergehend die Schrittgröße der Sendeleistungseinstellung erhöht wird.

## Claims

1. Method for controlling power for a radio communication system having a radio interface between a first and second radio station (BS, MS), in which
- the transmissions of the second radio station (MS, BS) are received in the first radio station (BS, MS) and a transmission power correction instruction (TPC) is determined for the transmission power of the second radio station (MS, BS),
- the transmission power correction instruction (TPC) is transmitted to the second radio station (MS, BS) during a subsequent transmission of the first radio station (BS, MS)
- the second radio station (MS, BS) takes the transmission power correction instruction (TPC) into consideration for adjusting the transmission power during one of its subsequent transmissions,
- the transmission power correction instruction (TPC) is referred to a variable increment (ΔTPC) of the transmission power adjustment which is adjusted by the radio stations (BS, MS) in a subscriber-dependent and time-dependent manner,
- and a condition of the transmission between the radio stations is evaluated repetitively in time in the radio stations (BS, MS),
**characterized in that**
- the transmission condition is an interruption of a continuous transmission for measuring purposes,
- and the increment of the transmission power adjustment is temporarily increased after the end of the interruption.

2. Method according to Claim 1, in which the amount of the increase of the increment is dependent on the length of the interruption.

3. Method according to one of the preceding claims, **characterized in that** a CDMA transmission method in broadband transmission channels is used for the radio interface.

4. Method according to one of the preceding claims, **characterized in that** the first radio station is a base station (BS) and the second radio station is a subscriber station (MS).

5. Method according to one of Claims 1 to 3, **characterized in that** the first radio station is a subscriber station (MS) and the second radio station is a base station (BS).

6. Method according to one of the preceding claims, **characterized in that** the increment (ΔTPC) to be used is signalled.

7. Method according to one of Claims 1 to 5, **characterized in that** the increment (ΔTPC) to be used is determined by the transmitted transmission power correction instruction (TPC).

8. Method according to one of Claims 1 to 5, **characterized in that** the increment (ΔTPC) to be used is established in accordance with a correspondence table or calculation rule linking the different transmission conditions with the increments (ΔTPC) to be used.

9. Radio communication system comprising
- a first radio station (BS, MS) and a second radio station (MS, BS) which are connected to one another via a radio interface,
- transmitting means (TX), allocated to the second radio station (MS, BS), for transmitting information, taking into consideration a transmission power correction instruction (TPC) for transmission power adjustment,
- receiving means (RX), allocated to the first radio station (BS, MS), for receiving the transmission of the second radio station (MS), control means (MPC) for determining a transmission power correction instruction (TPC) for the transmission power of the second radio station (MS) and transmission means (TX) for transmitting the transmission power correction instruction (TPC) during a subsequent transmission of the first radio station (BS, MS) to the second radio station (MS, BS),
- in which the control means (MPC) of the first radio station (BS, MS) are constructed in such a manner that a transmission condition is evaluated for the second radio station (MS, BS) and, in the case of a change in the transmission condition, this increment (ΔTPC) is increased or reduced in a subscriber-dependent and time-dependent manner in the sense of a variable increment (ΔTPC) of the transmission power adjustment, **characterized**
- **in that** the transmission condition is an interruption of a continuous transmission for measuring purposes,
- and **in that** the increment of the transmission power adjustment is temporarily increased after the end of the interruption.

## Revendications

1. Procédé destiné à la régulation de la puissance pour un système de communication radio comportant une interface radio entre une première et une deuxième station radio (BS, MS) dans lequel
- dans la première station radio (BS, MS), les émissions de la deuxième station radio (MS, BS) sont reçues et une instruction de réglage (TPC) de la puissance d'émission de la deuxième station radio (MS, BS) est définie,
- l'instruction de réglage (TPC) est transmise, dans une émission suivante de la première station radio (BS, MS), à la deuxième station radio (MS, BS),
- la deuxième station radio (MS, BS) tient compte, pour le réglage de la puissance d'émission, de l'instruction de réglage (TPC) lors de l'une de ses émissions suivantes,
- l'instruction de réglage (TPC) concerne une valeur variable de l'incrément ΔTPC pour le réglage de la puissance d'émission, qui est réglée, par les stations radio (BS, MS), abonné par abonné et en fonction du temps,
- et un état de la transmission entre les stations radio est évalué, d'une façon répétitive dans le temps, dans les stations radio (BS, MS)
**caractérisé par le fait**
- **que** l'état de la transmission est une interruption d'une transmission continue à des fins de mesure,
- et **que**, à la fin de l'interruption, la valeur de l'incrément de réglage de la puissance d'émission est provisoirement augmentée.

2. Procédé selon la revendication 1
dans lequel l'importance de l'augmentation de la valeur de l'incrément dépend de la longueur de l'interruption.

3. Procédé selon l'une des revendications précédentes **caractérisé par le fait qu'**on utilise, pour l'interface radio, un procédé de transmission CDMA dans des canaux de transmission à large bande.

4. Procédé selon l'une des revendications précédentes **caractérisé par le fait que** la première station radio est une station de base (BS) et la deuxième station radio est un poste d'abonné (MS).

5. Procédé selon l'une des revendications 1 à 3 **caractérisé par le fait que** la première station radio est un poste d'abonné (MS) et la deuxième station radio est une station de base (BS).

6. Procédé selon l'une des revendications précédentes **caractérisé par le fait que** la valeur d'incrément ΔTPC à utiliser est signalisée.

7. Procédé selon l'une des revendications 1 à 5 **caractérisé par le fait que** la valeur d'incrément ΔTPC à utiliser est fixée par l'instruction de réglage (TPC) transmise.

8. Procédé selon l'une des revendications 1 à 5 **caractérisé par le fait que** la valeur d'incrément ΔTPC à utiliser est fixée conformément à un tableau de correspondance enchaînant les différents états de transmission aux valeurs d'incrément ΔTPC à utiliser.

9. Système de communication radio
- avec une première station radio (BS, MS) et une deuxième station radio (MS, BS), qui sont reliées l'une à l'autre à travers une interface radio,
- avec des moyens d'émission (TX), affectés à la deuxième station radio (MS, BS) et destinés à émettre des informations, une instruction de réglage (TPC) étant prise en compte pour le réglage de la puissance d'émission,
- avec des moyens de réception (RX), affectés à la première station radio (BS, MS) et destinés à recevoir l'émission de la deuxième station radio (MS), des moyens de contrôle (MPC), destinés à définir une instruction de réglage (TPC) pour la puissance d'émission de la deuxième station radio (MS), et des moyens de transmission (TX) destinés à transmettre l'instruction de réglage (TPC) lors d'une émission suivante de la première station radio (BS, MS) à la deuxième station radio (MS, BS),
- dans lequel les moyens de contrôle (MPC) de la première station radio (BS, MS) sont conçus de telle sorte qu'un état de transmission pour la deuxième station radio (MS, BS) est évalué et, dans le cas d'une modification de l'état de transmission, dans l'esprit d'une variation de la valeur de l'incrément ΔTPC du réglage de la puissance d'émission, cette valeur de l'incrément ΔTPC est augmentée ou diminuée, abonné par abonné et en fonction du temps,
**caractérisé par le fait**
- **que** l'état de transmission est une interruption d'une transmission continue à des fins de mesure
- et **que**, après la fin de l'interruption, la valeur de l'incrément du réglage de la puissance d'émission est provisoirement augmentée.
